# EUROPÄISCHE PATENTSCHRIFT

(11) **EP 2 637 892 B1**
(45) Veröffentlichungstag und Bekanntmachung des Hinweises auf die Patenterteilung: **01.10.2014**
(21) Anmeldenummer: 11723176.1
(22) Anmeldetag: 25.03.2011
(51) Int. Cl.: F41H 5/08, B60N 2/24, B60N 2/60, B60N 2/70

(54) **SCHUTZSCHALEN-VORRICHTUNG**
PROTECTIVE SHELL DEVICE
COQUE DE PROTECTION

(30) Priorität: 10.11.2010 DE 202010015284 U; 10.11.2010 WO PCT/DE2010/001312
(43) Veröffentlichungstag der Anmeldung: 18.09.2013
(73) Patentinhaber: Piekenbrink Composite GmbH, 88471 Laupheim (DE)
(72) Erfinder: PIEKENBRINK, Björn, 88471 Laupheim (DE); PIEKENBRINK, Olaf, 88471 Laupheim (DE); ÜBERLE, Stefan, 88416 Steinhausen (DE)
(74) Vertreter: Kiessling, Christian
(86) Internationale Anmeldenummer: PCT/DE2011/000326
(87) Internationale Veröffentlichungsnummer: WO 2012/062234

(56) Entgegenhaltungen:
- EP-A1- 0 062 448
- EP-A1- 1 672 307
- WO-A1-2010/130453
- DE-A1-102008 061 609
- FR-A1- 2 803 256
- US-A- 6 127 291
- US-A1- 2004 066 082
- US-A1- 2004 144 244
- US-B1- 6 550 858

## Beschreibung

Die Erfindung betrifft eine Schutzschalen-Vorrichtung mit einem Schalenkörper zum Schutz des menschlichen Körpers vor mechanischen Einwirkungen von außen, wobei der Schalenkörper (110) eine an die Formgebung eines Fahrzeugsitzes (130) anpassbare Außenkontur (111) und eine zur Aufnahme einer sitzenden Person anpassbare konkav/konvexe Innenkontur (112) aufweist und zumindest mehrheitlich aus einem im Wesentlichen kugelsicheren flexiblen Material hergestellt ist in (siehe z.B. US 2004/144 244 A1).

Vorrichtungen der eingangs genannten Art sind im Stand der Technik in einer Vielzahl unterschiedlicher Ausführungsformen bekannt. Speziell bei Kraftfahrzeugen ist es bekannt, vliesartige Einrichtungen auf einem Fahrzeugsitz anzubringen, um einen Fahrkomfort zu erhöhen.

Die bekannten Vorrichtungen weisen indes sämtlich den Nachteil auf, dass sie keinen wirksamen Schutz vor äußeren Einwirkungen liefern, die den Fahrzeuginsassen absichtlich einen Schaden zuführen sollen, wie insbesondere Pistolenschüsse oder Bombensplitter.

Aufgabe der Erfindung ist es deshalb, eine Schutzschalen-Vorrichtung zu schaffen, die Insassen eines in der Regel herkömmlich hergestellten und nicht mit weiteren Schutzmaßnahmen versehenen Kraftfahrzeuges einen Schutz auch vor Geschossen und Bombensplittern liefert.

Für eine Schutzschalen-Vorrichtung der eingangs genannten Art wird diese Aufgabe dadurch gelöst, dass das flexible Material Bereiche mit einem oder mehr festen Materialien integriert sind, und an dem Schalenkörper (110) Befestigungseinrichtungen vorgesehen sind, um den Schalenkörper (110) fest mit einem herkömmlichen Sitz (130) eines Kraftfahrzeuges zu verbinden.

Bevorzugte Ausführungsformen der Erfindung sind Gegenstand der Unteransprüche.

Die erfindungsgemäße Schutzschalen-Vorrichtung weist den Vorteil auf, dass die Sicherheit von Insassen nicht gepanzerter Fahrzeuge schnell und kostengünstig deutlich erhöht werden kann, wobei eine Schutzschale auch in unterschiedlichen Transportfahrzeugarten wie PKW, LKW, Boot oder Flugzeug verwendbar ist und eine Austauschbarkeit von einem ersten Fahrzeug zu einem zweiten Fahrzeug gegeben ist. Die erfindungsgemäßen Schutzschalen sind vorzugsweise aus leichten Materialien hergestellt und somit auch leicht transportabel ausgeführt, so dass Fahrzeugsitze mit entsprechenden Schutzschalen ohne größeren Aufwand nachgerüstet werden können.

Gemäß einer ersten bevorzugten Ausführungsform der erfindungsgemäßen Vorrichtung ist vorgesehen, dass das flexible Material eine Mehrzahl von übereinander angeordneten Schichten mit jeweils unterschiedlichen Komponenten enthält. Dabei kann es zum Zweck einer Schutzerhöhung in speziellen Bereichen vorteilhaft sein, dass in das flexible Material Bereiche mit einem oder mehr festen Materialien wie insbesondere Stahlplatten integriert sind.

Der Schalenkörper steht vorzugsweise seitlich zumindest teilweise über eine in dem Schalenkörper sitzende Person hervor.

Dabei ist es insbesondere vorteilhaft, wenn der Schalenkörper im Bereich von Kopf und Füßen über eine in dem Schalenkörper sitzende Person hervorsteht, und seitlich so weit über eine in dem Schalenkörper sitzende Person hervorsteht, dass das seitliche Profil der in dem Schalenkörper sitzenden Person mit Ausnahme ausgestreckter Arme vollständig abgedeckt ist. Zum Zweck eines verbesserten Armschutzes kann es vorteilhaft sein, wenn der Schalenkörper in den Bereichen der Arme einer darin sitzenden Person jeweils mit einem Vorsprung versehen ist.

Gemäß einer weiteren bevorzugten Ausführungsform der erfindungsgemäßen Vorrichtung ist vorgesehen, dass eine Befestigungseinrichtung eine Formgebung aufweist, die geeignet ist, um eine lösbar feste Verbindung mit neben einem Fahrzeugsitz anbringbaren Schnappverschlüssen eines herkömmlichen Sicherheitsgurtsystems herzustellen.

Alternativ kann als Befestigungseinrichtung mit einem Fahrzeugsitz ein Anbringen von einem oder mehr Adaptergurten vorgesehen sein, die beispielsweise durch Schlitze oder andere Öffnungen im Bereich der Schutzschale geführt werden können.

Als festes Material zum Herstellen eines erfindungsgemäßen Schalenkörpers kann vorzugsweise ein Verbundwerkstoff vorgesehen sein. Der Verbundwerkstoff kann dabei ein Fasermaterial enthalten, das vorzugsweise von Karbonfasern; Kunstfaser wie Kevlar oder Twaron; Glasfasern; Naturfasern; oder von Keramik gebildet ist.

Des Weiteren enthält der Verbundwerkstoff vorzugsweise eine Matrix, die von einem Thermoplast wie Polyvinylchlorid, Acrylnitril-Butadien-Styrol, Polyamid, Polyethylen oder Polypropylen; einem Duroplast wie einem Epoxid-Harz, einem Polyester-Harz oder einem Polyurethan; oder einem Elastomer wie Gummi oder Silikon gebildet sein kann.

Als flexibles Material zum Herstellen eines erfindungsgemäßen Schalenkörpers kann vorzugsweise ein Keramikgranulat vorgesehen sein.

Die erfindungsgemäße Schutzschalen-Vorrichtung wird im Folgenden anhand bevorzugter Ausführungsformen erläutert, die in den Figuren der Zeichnung dargestellt sind. Darin zeigen:
- Fig. 1: eine bevorzugte Ausführungsform der erfindungsgemäßen Vorrichtung in einer Seitenansicht;
- Fig. 2: eine weitere bevorzugte Ausführungsform der erfindungsgemäßen Vorrichtung in einer Seitenansicht;
- Fig. 3: eine weitere bevorzugte Ausführungsform der erfindungsgemäßen Vorrichtung in einer Seitenansicht;
- Fig. 4: die in Figur 2 dargestellte Ausführungsform der erfindungsgemäßen Vorrichtung in einer Ansicht von schräg vorne.

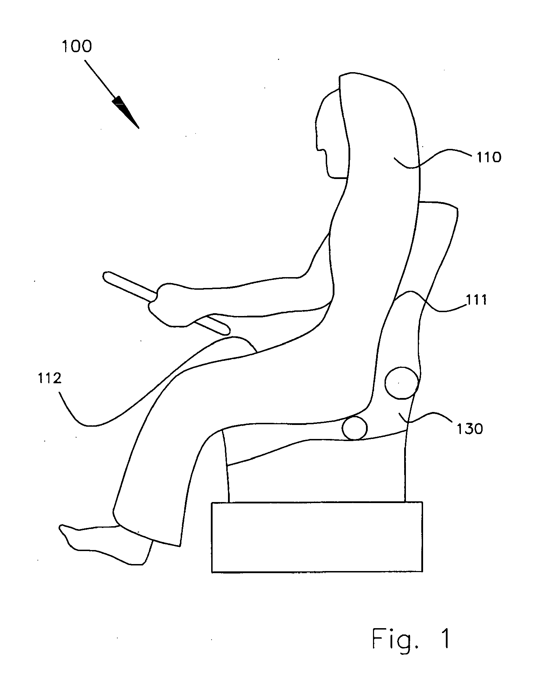

Die in den Figuren 1 bis 4 dargestellten erfindungsgemäßen Schutzschalen-Vorrichtungen 100 enthalten einen Schalenkörper 110 zum Schutz des Körpers einer in einem Fahrzeug sitzenden Person vor äußeren mechanischen Einwirkungen, wie insbesondere Geschossen oder Bombensplittern. Ein Schalenkörper 110 weist dabei eine an die Formgebung eines Fahrzeugsitzes angepasste Außenkontur 111 und eine zur Aufnahme einer sitzenden Person angepasste konkav/konvexe Innenkontur 112 auf und ist aus einem im Wesentlichen kugelsicheren flexiblen Material hergestellt.

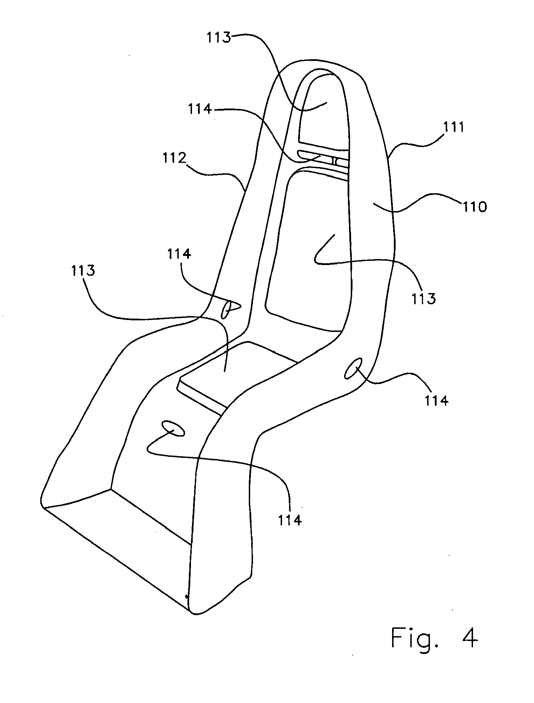

Das flexible Material enthält eine Mehrzahl von übereinander angeordneten Schichten mit gleichen oder unterschiedlichen Komponenten, wobei in der in Figur 4 dargestellten Ausführungsform zum Zweck einer Erhöhung des Sicherheit vor Einwirkungen von außen in das flexible Material des Schalenkörpers 110 stellenweise Bereiche 113 aus einem festen Material eingebracht sind.

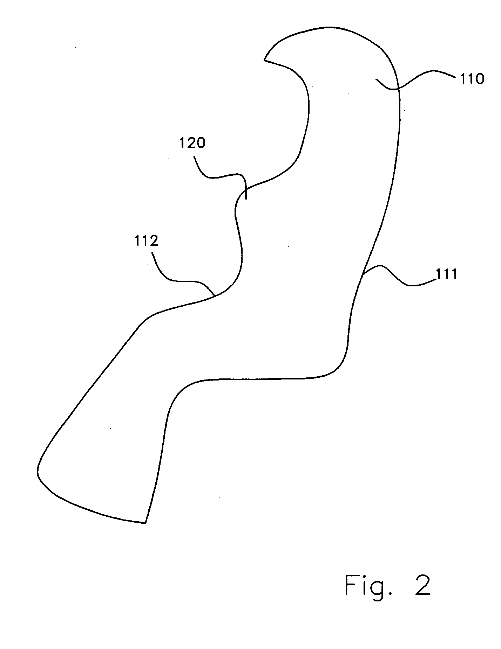

Bei den in den Figuren 1 bis 3 dargestellten Ausführungsformen steht der Schalenkörper 110 seitlich sowie im Bereich von Kopf und Füßen in unterschiedlichen Ausmaßen über eine in dem Schalenkörper 110 sitzende Person hervor, wobei ein Fußbereich in Figur 1 freigelassen ist und in den Figuren 2 bis 4 abgedeckt ist.

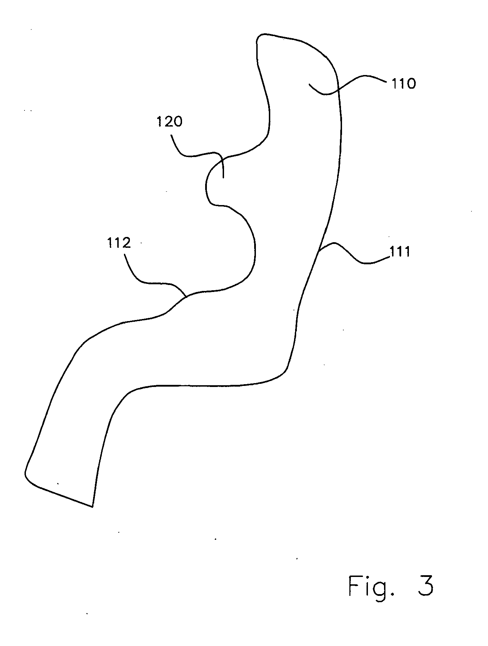

In den in den Figuren 2 und 3 dargestellten Ausführungsformen der erfindungsgemäßen Vorrichtung steht der Schalenkörper 110 seitlich so weit über eine darin sitzende Person hervor, dass das seitliche Profil der Person mit Ausnahme der ausgestreckten Arme vollständig abgedeckt ist. Im Bereich der Arme einer darin sitzenden Person ist der Schalenkörper mit einem Vorsprung 120 versehen, um auch die ausgestreckten Arme weitestgehend zu schützen.

Die in den Figuren 1 bis 4 dargestellten Schalenkörper 110 bilden jeweils eine von einem Fahrzeugsitz 130 separate Einheit. Aus diesem Grund sind zur Befestigung eines Schalenkörpers 110 an einem Fahrzeugsitz 130 unterschiedliche Befestigungseinrichtungen vorgesehen, um einen Schalenkörper 110 fest mit einem herkömmlich ausgebildeten Fahrzeugsitz 130 eines Kraftfahrzeuges zu verbinden.

In der in Figur 4 dargestellten Ausführungsform der erfindungsgemäßen Vorrichtung sind als Befestigungseinrichtung mit einem Fahrzeugsitz 130 verbindbare Adaptergurte vorgesehen, die durch in dem Schalenkörper 110 ausgebildete Schlitze 114 geführt sind.

Als festes Material ist ein Verbundwerkstoff vorgesehen, der Kunstfasern aus Kevlar enthält, die in eine duroplastische Matrix aus Epoxid-Harz eingebettet sind.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Schutzschalen-Vorrichtung (100) mit einem Schalenkörper (110) zum Schutz des menschlichen Körpers vor mechanischen Einwirkungen von außen, wobei der Schalenkörper (110) eine an die Formgebung eines Fahrzeugsitzes (130) anpassbare Außenkontur (111) und eine zur Aufnahme einer sitzenden Person anpassbare konkav/konvexe Innenkontur (112) aufweist und zumindest mehrheitlich aus einem im Wesentlichen kugelsicheren flexiblen Material hergestellt ist, **dadurch gekennzeichnet, dass** in das flexible Material Bereiche mit einem oder mehr festen Materialien integriert sind, und an dem Schalenkörper (110) Befestigungseinrichtungen (114) vorgesehen sind, um den Schalenkörper (110) fest mit einem herkömmlichen Sitz (130) eines Kraftfahrzeuges zu verbinden.

2. Vorrichtung nach Anspruch 1, **dadurch gekennzeichnet, dass** eine Befestigungseinrichtung eine Formgebung aufweist, die geeignet ist, um eine lösbar feste Verbindung mit neben einem Fahrzeugsitz (130) anbringbaren Schnappverschlüssen eines herkömmlichen Sicherheitsgurtsystems herzustellen.

3. Vorrichtung nach Anspruch 1, **dadurch gekennzeichnet, dass** als Befestigungseinrichtung mit einem Fahrzeugsitz (130) verbindbare Adaptergurte vorgesehen sind, die durch in dem Schalenkörper (110) ausgebildete Schlitze (114) geführt sind.

4. Vorrichtung nach einem der vorhergehenden Ansprüche, **dadurch gekennzeichnet, dass** das flexible Material eine Mehrzahl von übereinander angeordneten Schichten mit jeweils unterschiedlichen Komponenten enthält.

5. Vorrichtung nach einem der vorhergehenden Ansprüche, **dadurch gekennzeichnet, dass** der Schalenkörper (110) seitlich zumindest teilweise über eine in dem Schalenkörper (110) sitzende Person hervorsteht.

6. Vorrichtung nach einem der vorhergehenden Ansprüche, **dadurch gekennzeichnet, dass** der Schalenkörper (110) im Bereich von Kopf und Füßen über eine in dem Schalenkörper (110) sitzende Person hervorsteht.

7. Vorrichtung nach einem der vorhergehenden Ansprüche, **dadurch gekennzeichnet, dass** der Schalenkörper (110) seitlich so weit über eine in dem Schalenkörper (110) sitzende Person hervorsteht, dass das seitliche Profil der in dem Schalenkörper (110) sitzenden Person mit Ausnahme ausgestreckter Arme vollständig abgedeckt ist.

8. Vorrichtung nach Anspruch 7, **dadurch gekennzeichnet, dass** der Schalenkörper (110) in den Bereichen der Arme einer darin sitzenden Person jeweils mit einem Vorsprung (120) versehen ist.

9. Vorrichtung nach einem der vorhergehenden Ansprüche, **dadurch gekennzeichnet, dass** als festes Material ein Verbundwerkstoff vorgesehen ist.

10. Vorrichtung nach Anspruch 9, **dadurch gekennzeichnet, dass** der Verbundwerkstoff ein Fasermaterial enthält, das von Karbonfasern; Kunstfaser wie Kevlar oder Twaron; Glasfasern; Naturfasern; oder von Keramik gebildet ist.

11. Vorrichtung nach einem der Ansprüche 9 oder 10, **dadurch gekennzeichnet, dass** der Verbundwerkstoff eine Matrix enthält, die von einem Thermoplast wie Polyvinylchlorid, Acrylnitril-Butadien-Styrol, Polyamid, Polyethylen oder Polypropylen; einem Duroplast wie einem Epoxid-Harz, einem Polyester-Harz oder einem Polyurethan; oder einem Elastomer wie Gummi oder Silikon gebildet ist.

12. Vorrichtung nach einem der vorhergehenden Ansprüche, **dadurch gekennzeichnet, dass** als flexibles Material ein Keramikgranulat vorgesehen ist.

## Claims

1. A protective shell-like device (100) comprises a shell-like body (110) for the protection of the human body against external mechanical influences, which shell-like body features an outer contour (111), which is adaptable to the shape of the vehicle seat, and a concave/convex inner contour (112), which is adaptable to accommodate a seated person, said shell-like device being composed, at least predominantly, of a substantially bullet-proof, flexible material, **characterized in that** regions comprising one or more solid materials are incorporated in said flexible material, and that conventional attachment means (114) are provided on said shell-like body (110) in order to make it possible to attach said shell-like body (110) firmly to a conventional seat (130) of a motor vehicle.

2. A device as defined in claim 1, **characterized in that** a fixing device is shaped in such a manner that a detachable, firm connection with the catches of a conventional safety belt system mountable to the side of a vehicle seat (130) can be established.

3. A device as defined in claim 1, **characterized in that** adapter straps are provided that are capable of being attached to a vehicle seat and are guided through slits (114) formed in said shell-like body (110).

4. A device as defined in any one of the previous claims, **characterized in that** the flexible material contains a plurality of overlapping layers comprising various components.

5. A device as defined in any one of the previous claims, **characterized in that** said shell-like body (110) protrudes at least partially over the sides of a person seated in said shell-like body (110).

6. A device as defined in any one of the previous claims, **characterized in that** said shell-like body (110) protrudes over the head and feet regions of a person seated in said shell-like body (110).

7. A device as defined in any one of the previous claims, **characterized in that** said shell-like body (110) extends laterally across a person seated in the shell-like body (110) to such an extent that the lateral profile of the person seated in the shell-like body (110) is entirely concealed, with the exception of extended arms.

8. A device as defined in claim 7, **characterized in that** the shell-like body (110) is provided with a projection in each of the regions of the arms.

9. A device as defined in any one of the previous claims, **characterized in that** the solid material used is a compound material.

10. A device as defined in claim 9, **characterized in that** the composite material consists of a fibrous material composed of carbon fibers; synthetic fibers such as Kevlar or Twaron; glass fibers; natural fibers; or ceramic material.

11. A device as defined in any one of claims 9 or 10, **characterized in that** said compound material is a matrix containing a thermoplast such as polyvinyl chlorid, an acrylonitrile/butadiene/styrene, polyamide, polyethylene, or polypropylene; a duroplast such as an epoxy resin, a polyester resin or a polyurethane; or an elastomer such as rubber or silicone.

12. A device as defined in any one of the previous claims, **characterized in that** the flexible material used is composed of ceramic granules.

## Revendications

1. Dispositif de coque de protection (100) comprenant un corps de coque (110) destiné à la protection du corps humain contre des effets mécaniques provenant de l'extérieur, le corps de coque (110) présentant en l'occurrence un contour extérieur (111) adaptable à la forme d'un siège de véhicule (130) et un contour intérieur (112) concave/convexe adaptable à recevoir une personne assise et étant fabriqué au moins en majeure partie à partir d'un matériau flexible essentiellement pare-balles, **caractérisé en ce que**, dans le matériau flexible, des zones comprenant un ou plusieurs matériaux solides sont intégrées, et **en ce que**, sur le corps de coque (110), des équipements de fixation (114) sont prévus pour solidariser solidement le corps de coque (110) avec un siège conventionnel (130) d'un véhicule automobile.

2. Dispositif selon la revendication 1, **caractérisé en ce qu'**un équipement de fixation présente une forme appropriée à générer une jonction fixe et amovible avec des fermetures à enclenchement d'un système de ceinture de sécurité conventionnel pouvant être monté à côté d'un siège de véhicule (130).

3. Dispositif selon la revendication 1, **caractérisé en ce que**, en tant qu'équipement de fixation avec un siège de véhicule (130), des ceintures adaptatrices raccordables qui sont passées à travers des fentes (114) pratiquées dans le corps de coque (110) sont prévues.

4. Dispositif selon une des revendications précédentes, **caractérisé en ce que** le matériau flexible renferme une pluralité de couches agencées les unes au-dessus des autres et respectivement constituées de différents composants.

5. Dispositif selon une des revendications précédentes, **caractérisé en ce que** le corps de coque (110) fait latéralement saillie au moins partiellement par rapport à une personne assise dans le corps de coque (110).

6. Dispositif selon une des revendications précédentes, **caractérisé en ce que**, dans la zone de la tête et des pieds, le corps de coque (110) fait saillie par rapport à une personne assise dans le corps de coque (110).

7. Dispositif selon une des revendications précédentes, **caractérisé en ce que** le corps de coque (110) fait en une telle proportion latéralement saillie par rapport à une personne assise dans le corps de coque (110) que le profil latéral de la personne assise dans le corps de coque (110) est entièrement recouvert, bras tendus non compris.

8. Dispositif selon la revendication 7, **caractérisé en ce que** le corps de coque (110) est respectivement pourvu d'une avancée (120) dans les zones des bras d'une personne y étant assise.

9. Dispositif selon une des revendications précédentes, **caractérisé en ce que**, en tant matériau solide, un matériau composite est prévu.

10. Dispositif selon la revendication 9, **caractérisé en ce que** le matériau composite comporte un matériau fibreux constitué de fibres de carbone; de fibres synthétiques telles que le Kevlar ou le Twaron; de fibres de verre; de fibres naturelles; ou de céramique.

11. Dispositif selon une des revendications 9 ou 10, **caractérisé en ce que** le matériau composite comporte une matrice qui est constituée d'un thermoplastique tel que chlorure de polyvinylidène, acrylonitril-butadiène-styrène, polyamide, polyéthylène ou polypropylène; d'un thermodurcissable tel qu'une résine époxyde, une résine polyester ou un polyuréthane; ou d'un élastomère tel que caoutchouc ou silicone.

12. Dispositif selon une des revendications précédentes, **caractérisé en ce que**, en tant matériau flexible, un granulé céramique est prévu.
